# EUROPÄISCHE PATENTSCHRIFT

(11) **EP 2 149 141 B1**
(45) Veröffentlichungstag und Bekanntmachung des Hinweises auf die Patenterteilung: **02.02.2011**
(21) Anmeldenummer: 08748767.4
(22) Anmeldetag: 22.04.2008
(51) Int. Cl.: H01F 7/20, B65B 7/28, B67B 3/10, B21D 26/14

(54) **Verschließen von Behältern mittels MEHRFACHROHRBEARBEITUNGSSPULE**
Closing containers with a MULTIPLE TUBE PROCESSING COIL
Fermeture de récipients avec une BOBINE DE TRAITEMENT DE TUBES MULTIPLES

(30) Priorität: 27.04.2007 DE 102007019971
(43) Veröffentlichungstag der Anmeldung: 03.02.2010
(73) Patentinhaber: Pasquale, Pablo, 63856 Bessenbach (DE); Schütz, Wolfgang, 63599 Biebergemünd (DE)
(72) Erfinder: Pasquale, Pablo, 63856 Bessenbach (DE); Schütz, Wolfgang, 63599 Biebergemünd (DE)
(74) Vertreter: Pöhner, Wilfried Anton, Dr.
(86) Internationale Anmeldenummer: PCT/DE2008/000691
(87) Internationale Veröffentlichungsnummer: WO 2008/131728

(56) Entgegenhaltungen:
- WO-A-97/22426
- WO-A-2008/008906
- JP-A- 60 196 906
- JP-A- 61 099 311
- US-A- 3 581 540
- US-A- 4 531 393
- US-A- 5 684 341

## Beschreibung

Die Erfindung bezieht sich auf ein Verfahren zum Verschließen von Behältern mit Kappen

Solch ein Verfahren ist in der US-A-5684341 offenbart.

Zum Verformen von rohrförmigen Teilen aus leitfähigem Material wie z.B. Kappen ist das Elektromagnetische Puls-Fügen EMPF bekannt. Es nutzt die Kraftwirkung eines Magnetfeldes, um axialsymmetrische Werkstücke aus leitfähigem Material wie Rohre und Ringe zu verformen. Als Werkzeug dient dafür eine Stromdurchflossene Spule, in deren Inneren ein Magnetfeld das Werkstück über die Fließgrenze hinaus beansprucht, es dadurch verformt und so an die Oberfläche des Gegenstückes zum Werkstück anpresst.

Eine bekannte Anwendung ist zum Beispiel, auf dem Hals eines Benzintanks aus Kunststoff einen rohrartigen Einfüllstutzen durch Bördeln zu befestigen. Eine andere, bekannte Anwendung ist die Herstellung einer Abschleppstange für Kraftfahrzeuge. Dazu wird ein Aluminiumrohr durch Elektromagnetisches Puls-Fügen mit zwei stählernen Kupplungsstücken verbunden.

Bei diesen und anderen Anwendungen umschließt eine Spule den zu verformenden Gegenstand aus elektrisch leitfähigem Material in geringem Abstand. Wenn diese Spule von einem elektrischen Strom durchflossen wird, bildet sich ein Magnetfeld aus, das auch den zu verformenden Körper umschließt, und dabei in dessen Oberfläche Wirbelströme induziert, die wiederum ein zweites, magnetisches Feld erzeugen, das in seiner Richtung dem ersten entgegen gesetzt ist, weshalb sich die beiden Felder voneinander abstoßen. Dadurch bildet sich auf dem Umfang des zu verformenden Werkstückes in der Ebene der elektrischen Spule auf dem gesamten Umfang eine Kraft, die radial auf den Mittelpunkt des Werkstückes ausgerichtet ist.

Wenn diese Kraft so groß ist, dass die Grenze der elastischen Verformbarkeit des Werkstückes überschritten ist, wird es dauerhaft verformt. Weil diese Grenze nur ein einziges Mal und nur für eine sehr kurze Zeit überschritten werden muss, ist es sinnvoll, eine Stromquelle zu verwenden, die die Energie Pulsweise abgibt, wie z.B. eine so genannte Kondensatorbank, die aus zahlreichen miteinander verschalteten Kondensatoren besteht. Diese Kondensatoren werden ohne Last kontinuierlich aufgeladen und dann über einen Schalter schlagartig mit einer Spule verbunden, die das Werkstück umschließt. Auf dem aktuellen Stand der Technik werden Stromwerte von 150.000 - 500.000 Ampere erreicht. Derart hohe Ströme entladen die Kondensatorbank in sehr kurzer Zeit, ein typischer Wert auf aktuellem Stand der Technologie sind 45. Mikrosekunden.

Während der Strom fließt, baut er einen derart hohen magnetischen Fluss auf, dass das in dem Werkstück erzeugte, sekundäre Magnetfeld, das zum erzeugenden, primären Magnetfeld invers ausgerichtet ist, durch seine Reaktionskraft so große Kräfte erzeugt, dass die Wandung des Werkstückes auf Spitzengeschwindigkeiten bis zu 500 Meter pro Sekunde beschleunigt und dabei umgeformt wird.

Dabei ist es auch möglich, mehrere Körper, die konzentrisch ineinander gesteckt sind und sich gegenseitig berühren oder zumindest in sehr geringem Abstand zueinander stehen, zu verformen. Dabei ist die verformende Wirkung auf den äußersten aller Körper am größten. Der nächstliegende, innere Körper wird dann vor allem durch die mechanische Einwirkung des äußeren Körpers verformt. Im Vergleich dazu wird in den meisten Fällen, abhängig von der Wandstärke und der magnetischen Leitfähigkeit des äußeren Körpers, die magnetische Einwirkung auf den weiter innen angeordneten Körper sehr gering sein oder sogar unter der Verformungsgrenze liegen, weil der größte Teil der magnetischen Energie bereits im äußeren Körper für die Ausbildung von Wirbelströmen verbraucht worden ist.

Deshalb können auf diese Weise innerhalb eines Körpers aus magnetisch leitendem Material auch Körper aus einem anderen, verformbaren und elektromagnetisch nicht leitenden Material, wie z.B. Kunststoff, eingebracht werden. Diese Zwischenringe sind als Isolator oder als Dichtring nutzbar.

Dieses prinzipiell sehr einfache Verfahren hat für eine erfolgreiche Umsetzung jedoch einige Probleme und Einschränkungen, die unter anderem im Patent US 4,150,274 beschrieben werden.

Da der Innendurchmesser der Spule nur geringfügig größer als der Außendurchmesser des Werkstückes sein sollte, benötigt ein Hersteller; der das EMPF-Verfahren anwenden möchte, zahlreiche verschiedene Exemplare der teuren Spulen.

Ein weiterer Nachteil ist, dass diese Spule nur ein Werkstück gleichzeitig bearbeiten kann. Da das Werkstück recht genau in der Spule positioniert werden muss, nimmt das Beschicken und das Entladen der Vorrichtung weitaus mehr Zeit in Anspruch als der Fügevorgang selbst.

Ein anderes Problem des bekannten Standes der Technik ist die Größe der Spule. Insbesondere dann, wenn mehrere Werkstücke gleichzeitig in einer Vorrichtung bearbeitet werden sollen, ist der für die Spulen benötigte Platz größer als der für die Werkstücke.

Ein anderer Nachteil ist, dass Spulen mit zahlreichen Windungen vorteilhaft für die Anpassung an die aktuell verfügbaren Kondensatoren mit typischerweise sehr hohen Spannungen sind. Der Nachteil einer solchen, mehrwindigen Spule ist jedoch, dass sich die einzelnen Windungen während des Stromflusses aufeinander abstützen und der gleichen, hohen Reaktionskraft standhalten müssen, die im Werkstück für bleibende Verformungen sorgt. Das kann dazu führen, dass sich die Leiter der Spule untereinander berühren und dabei ihre Isolation abstreifen oder abschlagen, sodass es zu einem Kurzschluss kommt und die Spule unbrauchbar wird.

Auf aktuellem Stand der Technik erläutert die PS JP 61099311 die Stabilisierung einer Isolationsschicht im Inneren einer hohlzylindrischen Spule durch das Eingießen eines Netzes oder eines ähnlichen flächigen Elementes mit zahlreichen Öffnungen. Erwähnt wird auch das Ausgießen von Unregelmäßigkeiten in der Oberfläche der Spule.

Bisher bekannte Spulen für das EMPF-Verfahren sind generell aufwendig in der Herstellung und verschleißen im Vergleich zu anderen Maschinen der Fügetechnik recht schnell.

Auf aktuellem Stand der Technik beschreibt die PS-US 4,531,393 eine elektromagnetische Spule, mit der zwei halbrunde Zylindersegmente mittels des EMPF-Verfahrens zu einem vollen Zylinder verbunden werden. Die gleichzeitige Bearbeitung vom mehreren Körpern ist jedoch nicht vorgesehen.

Die PS-US 5,684,341 beschreibt eine Spule für das EMPF-Verfahren in die ein Formstück eingelegt wird, das mehrere Werkstücke gleichzeitig aufnimmt. Als Werkstück wird auch der Deckel für einen Behälter genannt.

Ein Nachteil des Prinzips gemäß US 5,684,341 ist die ungleichmäßige Verteilung des magnetischen Flusses zwischen den einzelnen Werkstücken, so dass jedes Werkstück anders bearbeitet wird.

Ein weiterer Nachteil von US 5,684,341 ist, dass die Spule aufwendige Zusatzbaugruppen wie einen Feld-Concentrator benötigt.

Auf diesem Hintergrund hat sich die Erfindung die Aufgabe gestellt, ein Verfahren zum Verschließen von Behältern mittels Kappen durch elektromagnetische Pulse zu finden, dass für die gleichzeitige Bearbeitung von mehreren Kappen geeignet ist, dabei für die Anpassung an die jeweiligen Dimensionen der Kappen nur ein kompaktes und kostengünstiges Werkzeug erfordert, das eine schnelle Beschickung und Entladung und trotzdem eine hohe Lebensdauer ermöglicht. Diese Aufgabe wird durch die Merkmalen des unabhängigen Patentanspruchs 1 gelöst. Eine wichtige Eigenschaft der Erfindung ist, dass der elektrische Leiter für das gleichzeitige Verbördeln von mehreren Kappen geeignet ist. Dafür ist der U-förmige Leiter um mehrere Kappen herumgeführt; Wenn die Schenkel von diesem U geradlinig geformt wären, würden sie den Umriss einer jeden Kappe nur an zwei gegenüberliegenden Punkten berühren. Damit der elektrische Leiter die Kappen jedoch nicht nur an diesen zwei Punkten, sondern auf ihrem gesamten Um fang einem gleichmäßigen, magnetischen Feld aussetzt, weist er für jede Kappe jeweils eine Einbuchtung auf, wobei die Form jeder Einbuchtung der Hälfte der Form einer Kappe entspricht. Zwei jeweils einander gegenüberliegende Einbuchtungen bilden also gemeinsam den äußeren Umriss einer Kappe ab.

Da die Kappe in der Regel vor dem Bearbeiten einen größeren äußeren Umfang hat als nach dem Bearbeiten sind auch die Einbuchtungen entsprechend vergrößert.

In den meisten Fällen sollte der elektrische Leiter noch einen weiteren, kleinen, zusätzlichen Abstand zu der elektrisch leitenden Kappe haben, um zu verhindern, dass nicht ganz exakt positionierte oder etwas über die ideale Form herausragende Kappen einen Kurzschluss verursachen.

Zusätzlich sind jedoch zumindest die Innenkanten der Einbuchtungen auf beiden Seiten des elektrischen Leiters noch mit einer elektrischen Isolationsschicht versehen, um die Spannungsfestigkeit weiter zu erhöhen. Das Risiko eines Überschlages ist dadurch erhöht, dass bei jedem Bördelvorgang ein kurzer Stromstoß den elektrischen Leiter mit einer derart hohen Stromanstiegsgeschwindigkeit durchfließt, dass durch die Rückinduktion aus den Wirbelströmen in den elektrisch leitfähigen Kappen und dem daraus resultierenden, entgegen gerichteten magnetischen Feld hohe Spannungsspitzen in den elektrischen Leiter induziert werden.

Diese Isolation ist zudem durch die hohen mechanischen Belastungen der Spule ebenfalls einer hohen mechanischen Belastung ausgesetzt. Für eine besonders feste und belastbare Verbindung der Isolation mit dem mechanischen Grundaufbau des Leiters schlägt die Erfindung vor, dass die Beschichtung der Innenkanten sowie die Verbindungen dieser Beschichtungen durch Ausgießen von Öffnungen im mechanisch tragenden Grundaufbau des elektrischen Leiters sowie durch Ausgießen des Hohlraumes zwischen den Innenkanten und einer dazu komplementären, jedoch gleichmäßig beabstandeten Negativform der Innenkanten gebildet werden. Durch zusätzliche Öffnungen im mechanisch tragenden Grundaufbau und durch deren Ausgießen werden zapfenartige Halterungen der Isolkationsschichrt gebildet, die für eine besonders innige Anbindung der Isolation sorgen.

Ein wichtiger Vorteil des für die Erfindung als Spule angewandten elektrischen Leiters sind die Einbuchtungen, dank derer das Magnetfeld ebenso wie bei einer Einzelspule für jedes Werkstück um den gesamten Umfang des Werkstückes herum gleichmäßig stark ist. Mit verhältnismäßig geringem, in der Metallbearbeitung wohl bekanntem Aufwand können sämtliche Einbuchtungen so genau toleriert werden, dass auch die damit hergestellten Fügeverbindungen voneinander nur im Rahmen einer bestimmten Toleranz abweichen.

Für jede Spule problematisch ist die Erzielung einer ausreichenden Festigkeit, weil prinzipiell geeignete Metallwerkstoffe meistens mit zunehmender, mechanischer Festigkeit auch schlechtere elektrische Leitfähigkeit aufweisen.

Es ist das Verdienst der Erfindung, dieses Teilproblem in einer Ausführungsvariante der Erfindung dadurch zu lösen, dass der elektrische Leiter auf den einander gegenüberstehenden Innenflächen seiner Schenkel und auf den Innenkanten der Einbuchtungen mit einem Material beschichtet wird, dessen elektrische Leitfähigkeit höher ist als der übrige Bereich des elektrischen Leiters. Diese innere Schicht ist also vor allem auf eine optimale elektrische Leitfähigkeit ausge legt, während der übrige Bereich des elektrischen Leiters zusätzlich zu seiner elektrischen Leitfähigkeit auch eine hohe mechanische Festigkeit aufweist.

Der U-förmige elektrische Leiter kann als so genannte "einwindige" Spule aufgebaut werden. Im Vergleich zum bekannten Stand des EMPF mit mehrwindigen Spulen können bei einer solchen einwindigen Spule nach außen gerichtete Kräfte die Windung nicht durch Berührung mit sich selbst beschädigen oder gar kurz schließen. Ebenso entfallen die Abstoßungskräfte zwischen aufeinander liegenden Windungen und der dadurch bewirkte Verschleiß. Im Vergleich ist eine einwindige Spule erheblich kostengünstiger, sehr viel einfacher zu fertigen, vor allem aber erheblich steifer und deshalb auch langlebiger.

Als weitere Ausführungsvariante ist denkbar, dass der elektrische Leiter von zusätzlichen Elementen abgestützt wird, die ausschließlich auf eine hohe mechanische Belastbarkeit optimiert sind.

Als eine Ausführungsvariante schlägt die Erfindung vor, den mechanisch tragenden Grundaufbau des elektrischen Leiters aus übereinander gestapelten Blechen aufzubauen, die elektrisch gegeneinander isoliert sind und mechanisch fest miteinander verbunden sind. Dieses Prinzip ist z. B. von elektrischen Asynchronmotoren bekannt und millionenfach verbreitet. Dabei sind die einzelnen Bleche gegeneinander isoliert, z. B. durch eine Kunststoffbeschichtung und dann tragfähig miteinander verschraubt oder vernietet. Dadurch werden Wirbelströmen im Inneren des Leiters unterdrückt, die für erhöhte Verluste sorgen.

Ein weiterer Vorteil dieser Struktur ist, dass die Innenkanten des elektrischen Leiters durch unterschiedliche Formgebung der Einbuchtungen schnell und einfach an das Werkstück angepasst werden können und dabei auch noch die erfindungsgemäßen Wülste in Höhe des Bearbeitungsbereiches durch feine Treppenstufen approximieren können.

Im Folgenden sollen die Eigenschaften und Vorzüge der erfindungsgemäßen Anwendung einer Mehrfachrohrbearbeitungsspule zum Verschließen von Behältern mit einer Kappe aus Metall erläutert werden. Dafür ist es der bekannte Stand der Technik, die Kappen auf die zu verschließenden Flaschen oder andere Behälter aufzusetzen und durch eine umlaufende Bördelscheibe im Anpressbereich des Behälters einzuschnüren und dadurch dichtend an den Behälter anzulegen. Bei diesem Vorgang wird das Metall ohne Temperaturänderung, also kalt verformt, was auch als "Bördeln" bezeichnet wird.

Nachteile dieses Verfahrens sind die relativ aufwändige Anordnung und Befestigung der Bördelscheibe sowie Beschädigungen an der Kappe durch Gleitbewegungen der Scheibe auf der Oberfläche. Falls bei der Verpackung von Arzneien und hoch empfindlichen Lebensmitteln Sterilität gewährleistet sein muss, ist es ein Nachteil dieses Prinzips, dass die Bördelscheibe die Kappe berührt und die Sterilität dieser Problemzone einen erhöhten Reinigungsaufwand erfordert.

Ein weiteres Problem ist, dass eine Bördelscheibe, die um den gesamten Umfang eines Körpers herum geführt wird, nach 360 ° auf einen bereits bearbeiten Bereich stößt, wodurch eventuell eine nicht mehr erwünschte, weitere Verformung eintreten kann.

Für diese Aufgabe bietet die Anwendung einer erfindungsgemäßen Mehrfachrohrbearbeitungsspule etliche Vorteile:
Die Gleichmäßigkeit der Kraftverteilung auf dem Umfang der Kappe ermöglicht es, nicht nur die Kappe auf dem Behälter zu sichern, sondern einen dichten Verschluss zu erreichen.

Dichtigkeit ist bekanntlich nur dann zu erreichen, wenn die Kappe den Behälter auf wenigstens einer Linie berührt, die um den Hals des Behälters herum führt und in sich vollständig geschlossen ist. Die Erweiterung dieser Linie auf eine Fläche verändert oder verbessert die Dichtigkeit nicht. Nur durch Unterbrechen der Linie wird der Verschluss undicht. Zwar bildet in der Praxis eine Unterbrechung zuerst nur einen sehr schmalen Spalt, durch den weder nennenswerte Mengen aus dem Behälter heraustreten noch große Volumina von außen her in den Behälter hinein diffundieren können. Wenn es jedoch darum geht, den Behälter steril abzudichten, darf idealer Weise nicht ein einziges Molekühl die Dichtungslinie überwinden.

Diese Forderung ist am besten mit im Querschnitt kreisförmigen Kappen zu erfüllen. Es ist jedoch prinzipiell auch denkbar, dass der äußere Umriss der Kappe aus verschiedenen Radien zusammengesetzt ist. Auch für elliptische Umrisse der Kappe sollte ein vollumfänglich dichtender Verschluss durch Bördeln problemlos möglich sein.

Die meisten Behälter oder mit Kappen zu besetzenden anderen Körper haben einen kreisförmigen Umriss. In diesem Fall wird auch die Innenkante der beiden jeweils gegenüberliegenden Einbuchtungen kreisförmig sein, jedoch mit einem etwas größeren Durchmesser als die Körper. Die innere Form der Einbuchtung ist also komplementär zur und äquidistant gegenüber der Form der Körper vergrößert.

Wenn der äußere Umriss der Körper jedoch von der Kreisform abweicht, so ist unter dem Begriff äquidistant zu verstehen, dass an allen Punkten der Körperoberfläche eine gleiche Kraft wirkt, die das Material der Körper zusammendrückt, und dadurch den Bördelvorgang auslöst.

Schwierig ist das dichte Verschließen einer Kappe mit quadratischem Umriss. Hier erfordert das mechanische Verfahren mit einer umlaufenden Bördelscheibe, dass deren Führung sehr genau auf den zu verschließenden Umriss angepasst ist. Andernfalls besteht die Gefahr, dass z.B. auf die Ecken sehr hohe Kräfte aufgebracht werden, die graden Abschnitte zwischen den Ecken jedoch nicht ausreichend verformt werden. Auch mit einer erfindungsgemäßen Mehrfachrohrbearbeitungsspule sollte die Kappe auf jeden Fall mit möglichst großem Radius abgerundete Ecken aufweisen.

Die entscheidende Innovation der Erfindung ist jedoch, dass für eine solche Form die Innenkanten des elektrischen Leiters in den Eckbereichen weiter vom zu verformenden Körper beabstandet sein kann als in den übrigen Bereichen, wodurch die Verformungskraft dort reduziert wird und im Endergebnis eine gleichmäßige Anpressung der Kappe auf dem gesamten Umfang erreicht wird. Die Form der Einbuchtungen im elektrischen Leiter ist also auf die Kontur des Werkstückes abgestimmt.

Dieses Beispiel zeigt, dass mit einer erfindungsgemäßen Mehrfachrohrbearbeitungsspule an jeder Stelle des Umfanges eine gleiche Verformung im Bearbeitungsbereich der Kappe erreicht werden kann. Daraus ergibt sich, dass mit dem Begriff "äquidistant" des Hauptanspruches nicht in jedem Fall ein geometrisch über den Umfang hinweg gleicher Abstand zwischen dem Werkzeug "elektrischem Leiter" und dem Werkstück "Körper" gemeint ist, sondern eine über den Umfang hinweg gleichmäßige Verformung des Werkstückes.

In einer weiter optimierten Ausführungsvariante schlägt die Erfindung vor, dass jeweils ein Paar gegenüberliegender Innenkanten in einer Radialebene als Wulst geformt ist, der auf den Bearbeitungsbereich der Körper gerichtet ist. Dadurch wird das Magnetfeld auf den Bearbeitungsbereich fokussiert, was den Wirkungsgrad verbessert und die Ausformung im Bearbeitungsbereich verstärkt, so dass die nach dem Bördelvorgang noch im Bearbeitungsbereich wirksame Anpresskraft des Körpers steigt.

Die Notwendigkeit für eine solche, dauerhafte Anpresskraft ergibt sich daraus, dass jeder Werkstoff grundsätzlich eine Elastizität hat. Deshalb muss jeder Formungsprozess - geometrisch gesehen - immer etwas "über das Ziel hinaus" geführt werden, weil das verformte Material anschließend wieder etwas "zurückfedert".

Um also einen Behälter aus einem Werkstoff mit sehr geringer Elastizität, wie z. B. Glas, dichtend mit einer Metallkappe durch Bördelung zu verschließen, muss im Anpressbereich des Behälters, also z. B. um dessen Hals herum, eine Einschnürung oder Kerbe verlaufen, in welche das Metall der Kappe durch den Bördelvorgang hineingepresst wird und nach dem Abklingen des Magnetfeldes auch wieder etwas zurückfedern kann, ohne in der Nachbarschaft zur umlaufenden Kerbe den Kontakt zur Glasfläche zu verlieren.

Alternativ kann am Behälter im Anpressbereich in einer radialen Ebene ein in sich geschlossener Wulst umlaufen. In diesem Fall fungieren nach dem Abklingen der magnetisch erzeugten Bördelkraft die Bereiche neben dem Wulst als Rückfederweg für die Metallkappe.

Eine weitere Alternative ist die Ausbildung eines Wulstes an der Innenseite der Kappe in einer radialen Ebene innerhalb deren Bearbeitungsbereichs.

Bei dünnwandigen Gefäßen, die durch die Bördelkraft am Umfang einzuknicken drohen, muss zur Aufnahme dieser Kräfte ein Pfropfen eingesetzt werden, der vor allem die radial wirkenden Kräfte aufnehmen kann. Deshalb ist es denkbar, dass dieser Pfropfen aus einem außen umlaufenden Zylindermantel besteht, der durch zahlreiche radiale Stege abgestützt ist.

Ein Vorteil eines derart gestalteten Pfropfen ist es, dass er eventuell sogar bei dem Entleeren einer Flüssigkeit aus dem Behälter im Behälterhals bleiben kann, da er zu einer Homogenisierung der Strömung dient, die aus der Öffnung des Behälters heraustritt.

Zur Verwendung einer einwindigen Spule ist in der Regel wischen der Pulsstromquelle und dem elektrischen Leiter die Zwischenschaltung eines Transformators als Feldübersetzer erforderlich. Dieser Feldübersetzer verringert die Potentialdifferenz zwischen beiden Schenkeln des elektrischen Leiters und erhöht dafür den Strom, wodurch der magnetische Fluss weiter ansteigt.

Eine weitere Teilaufgabe ist es, die beiden Schenkel des elektrischen Leiters mechanisch so stabil zu gestalten, dass sie während des Bördelvorganges nicht auseinander gedrückt werden. Dafür sind Zuganker geeignet, die paarweise eingesetzt werden können: Je ein Zuganker ist oberhalb und unterhalb des U-förmigen Leiters angeordnet und über je eine Druckplatte auf den Stirnkanten der beiden Schenkel mit seinem Pendant verbunden.

Alternativ oder zusätzlich können die beiden Schenkel durch Ringe aus Fasern oder einem anderen nicht leitenden Material verstärkt sind, die senkrecht zu beiden Schenkeln ausgerichtet sind und die Schenkel anliegend umschließen. Ein geeignetes Fasermaterial ist zum Beispiel Aramid.

In einer anderen Variante ist jeder Schenkel durch je einen seitlich aufgesetzten flächigen Steg verstärkt, der in der Ebene der Schenkel angeordnet ist und in der Mitte der Schenkel am breitesten ist. Deshalb ist dort die Tragfähigkeit des Stegs auch am höchsten. Diese Formation ähnelt den Tragwerken von Brücken, die in der Mitte zwischen den beiden Auflagepunkten am höchsten sind.

Bei einem jeden Elektromagnet, also auch bei dem hier als "elektrischen Leiter" bezeichneten Verschließwerkzeug, ist das Auftreten eines Magnetfeldes untrennbar mit einem elektrischen Strom verknüpft. Deshalb ist als prinzipielle Auslegungsvariante dieses elektrischen Leiters eine Optimierung auf eine gute elektrische Leitfähigkeit ebenso denkbar wie alternativ auch auf eine gute magnetische Leitfähigkeit.

Für die zweite Variante schlägt die Erfindung vor, dass die Innenkanten der Einbuchtungen in den Schenkeln mit einem Material beschichtet sind, dessen magnetische Leitfähigkeit höher ist als in den übrigen Bereichen des Leiters. Diese Beschichtungen der Einbuchtungen müssen von Einbuchtung zu Einbuchtung durch möglichst kurze Verbindungsstücke aus einem ebenfalls magnetisch besser leitenden Material miteinander verbunden werden.

Weitere Optimierungen ergeben sich durch die Art und die Anzahl der Behälter, die in einem Vorgang verschlossen werden können.

Wenn das Füllgut des Behälters nach dem Einfüllen auch bei nach unten weisender Öffnung des Behälters gar nicht oder nur in sehr geringem Umfang aus dem Behälter austritt, wenn also eine spätere Entleerung des Behälters nur durch Schütteln möglich ist, dann ist es denkbar, auch einen "auf dem Kopf stehenden" Behälter durch Bördeln mit einer Kappe zu verschließen. Für diesen Sonderfall ist es dann denkbar, dass in einer Mehrfachrohrbearbeitungsspule die eine Hälfte der Behälter von oben her in den elektrischen Leiter eingeführt wird und die andere Hälfte der Behälter von unten her in den elektrischen Leiter hinein angehoben wird. In diesem Fall erfordert der elektrische Leiter als Verschließwerkzeug die Ausbildung von zwei zueinander beabstandeten Wülsten innerhalb einer einzigen Einbuchtung.

Bei ausreichender Leistungsfähigkeit der Pulsstromquelle ist es sinnvoll, daran mehrere elektrische Leiter für einen gemeinsamen Verschließvorgang anzuschließen. Auf diese Weise kann auch bei vergleichsweise kleinen Körpern die Leistungsfähigkeit der Stromquelle in vollem Umfang genutzt werden. In diesem Fall kann es sinnvoll sein, dass die gemeinsame Pulsstromqueiie der Mittelpunkt der an sie angeschlossenen und sternförmig darum herum angeordneten Leiter ist.

Für Fälle, in denen es das Füllgut der Behälter zulässt, dass die Behälter auch in einer anderen Position als mit der Öffnung nach oben weisend verschließbar sind, ist es denkbar, dass mehrere elektrische Leiter parallel zueinander und auf einer zylindrisch geformten Ebene angeordnet sind. Auf diese Weise kann z. B. bei der Verpackung von Pillen im Pharmabereich die Zuführung der Behälter besser strukturiert werden.

Als eine weitere Ausführungsvariante einer erfindungsgemäßen Mehrfachrohrbearbeitungsspule in der Anwendung zum Verschleißen von Kappen ist es denkbar, dass über die Dichtschließende Metallkappe eine weitere Kappe aufgesteckt wird, die vor allem einer optischen Verbesserung dient. Dadurch entfällt die Notwendigkeit für ein perfektes äußeres Finish der dann innen gelegenen Kappe aus elektrisch leitfähigem Werkstoff. Zur Befestigung dieser äußeren, dekorativen Abdeckkappe ist es sinnvoll, dass sie an ihrer Innenseite einen umlaufenden Wulst aufweist, welcher in einer Vertiefung auf der Metallkappe einrastet, die sich durch das Verbördeln bildet. Anstelle des umlaufenden Wulstes reichen auch drei gleichmäßig verteilte Rastnasen:

Für die Variante des elektrischen Leiters mit seinen Einbuchtungen, die aus zwei verschiedenen Komponenten besteht, nämlich einem äußeren, auch mechanisch sehr belastbaren Grundaufbau und einer inneren, sehr leitfähigen Schicht zumindest an den Innenkanten der Einbuchtungen, ist es für die Herstellung denkbar, dass diese Schicht und ihre Verbindungen untereinander durch Eingießen eines flüssigen Werkstoffes gebildet werden.

Dazu schlägt die Erfindung vor, dass der mechanisch tragende Grundaufbau nach innen hin durch eine komplementär geformte jedoch gleichmäßig beabstandete Negativform ergänzt wird und der Hohlraum zwischen dieser Negativform und dem mechanisch tragenden Grundaufbau ausgegossen wird. Dabei handelt es sich je nach der gewählten Auslegungsphilosophie des elektrischen Leiters entweder um ein Material mit besonders hoher, elektrischer Leitfähigkeit oder mit besonders hoher magnetischer Leitfähigkeit. Das Prinzip eines solchen Verfahrens ist für Drehstromasynchronmotoren bekannt und millionenfach bewährt, für Mehrfachrohrbearbeitungsspulen jedoch neu.

Für das Verschließen von Behältern mit Kappen aus elektrisch leitfähigem Material durch eine erfindungsgemäße Mehrfachrohrbearbeitungsspule ergibt sich folgendes Verfahren. Falls der Behälter relativ dünnwandig ist, wird er mit einem Pfropfen im zu verschließenden Bereich ausgefüllt. Dann wird über die zu verschließende Öffnung des Behälters eine Kappe soweit aufgeschoben, dass der Bearbeitungsbereich der Kappe auf der Höhe des Anpressbereiches des Behälters angeordnet ist. Im nächsten Schritt wird jeder so vorbereitete Behälter mit seiner Kappe in eine der Einbuchtungen des elektrischen Leiters soweit eingeführt, dass sich der Bearbeitungsbereich der Kappe auf Höhe der Innenkante der Einbuchtungen des elektrischen Leiters befindet. Dann wird im nächsten Schritt der elektrische Leiter von einem Stromimpuls durchflossen, woraufhin das Magnetfeld um den elektrischen Leiter herum in der Kappe einen Strom induziert, welcher ein zweites Magnetfeld generiert, das zum ersten, erzeugenden gegensinnig orientiert ist und sich von diesem abstößt. Dadurch wird eine Kraft auf den elektrischen Leiter wie auch auf die Kappe ausgeübt. Da der elektrische Leiter mechanisch so stabil dimensioniert ist, dass er diesen Reaktionskräften Stand hält, wirkt sich die Reaktionskraft in vollem Umfang auf den Bearbeitungsbereich der Kappe aus und verformt diesen mit einer sehr hohen Geschwindigkeit.

Der Stromfluss wird in der Praxis meist dadurch beendet, dass die in der Pulsstromquelle gespeicherte elektrische Energie abgeflossen ist, in der Regel also sich Kondensatoren entladen haben. Dadurch endet auch der Stromfluss, so dass auch das Magnetfeld wieder zusammen bricht. Nach einer Zeit von typisch etwa 45 Mikrosekunden ist der Bördelvorgang beendet.

Entscheidende Vorteile dieser Art der Bördelung sind die berührungslose Einwirkung der Kraft, folglich keine Kontaminierung durch den direkten Kontakt mit dem Werkzeug, keine Beschädigungen der Oberfläche durch aufliegende Werkzeuge, keine Erwärmung der Randbereiche, eine gleichmäßige Verteilung der Bördelkraft und damit ein gleichmäßiges Anliegen der Innenseite der Kappe an der Außenfläche des Behälters, was einen dichten Verschluss bewirkt.

Während ein bereits verschlossener Behälter aus der Schließvorrichtung entfernt wird und der nächste in die Mehrfachrohrbearbeitungsspule eingeführt wird, werden die Kondensatoren wieder aufgeladen. Ein ähnliches Prinzip der Energieversorgung ist im Alltagsgebrauch vom Blitzlicht bei Fotoapparaten bekannt; auch hier ist die Leuchtdauer um Größenordnungen kürzer als die Ladungsdauer, weil nach gleichem Prinzip die Energie in Kondensatoren zwischengespeichert wird.

Die zuvor beschriebenen Ausführungsformen einer erfindungsgemäßen Mehrfachrohrbearbeitungsspule weisen gerade verlaufende Schenkel des elektrischen Leiters auf. Es ist jedoch auch ein abgewinkelt oder abgebogen Verlauf der Schenkel möglich, was z.B. bei der Nachrüstung von bestehenden Fertigungsanlagen eine vereinfachte Einpassung der Spule in eine bestehende Maschine ermöglicht.

Eine erfindungsgemäße Mehrfachrohrbearbeitungsspule kann - wie zuvor beschrieben - sehr vorteilhaft zum Verbördeln von Aluminiumkappen auf Glasflaschen oder Ampullen eingesetzt werden. Das Prinzip ist jedoch ebenso zum Fügen, Formen und dem atomaren Schweißen von Rohr- und/oder axialsymmetrischen Strukturen einsetzbar. Die zu bearbeitenden Körper müssen in jedem Fall in dem zu bearbeitenden Teilbereich etwa ringförmig aufgebaut sein und aus leitfähigem Material bestehen. Für den übrigen Bereich des Körpers ist jedoch Form und Material frei wählbar. Es können also Hohlkörper wie Flaschen oder Gefäße bearbeitet werden, aber auch andere Teile, die über einen etwa ringförmigen, leitfähigen Bereich aufweisen.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1:: Schrägbild eines elektrischen Leiters mit Behältern, Zugankern und Feldübertragung
- Figur 2:: Abschnitt eines Schenkels des elektrischen Leiters mit einem vertikal geschnittenen Behälter vor dem Verbördeln
- Figur 3:: Wie Figur 2, jedoch nach dem Verbördeln

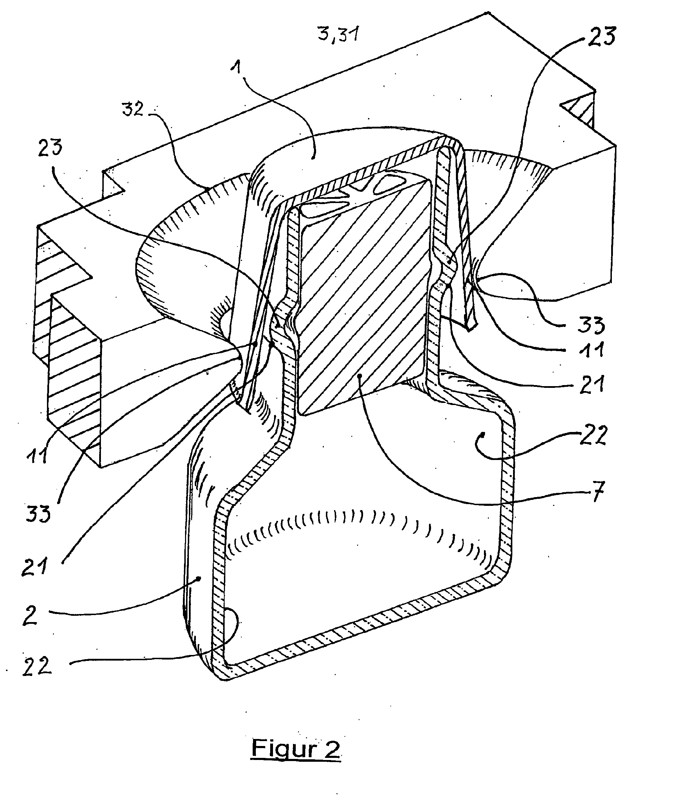

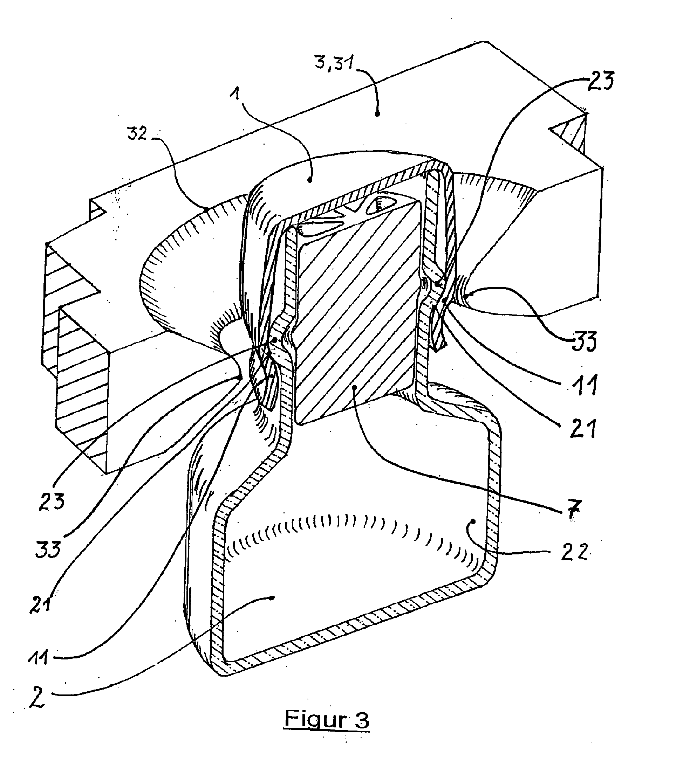

Die Figuren zeigen im Einzelnen:

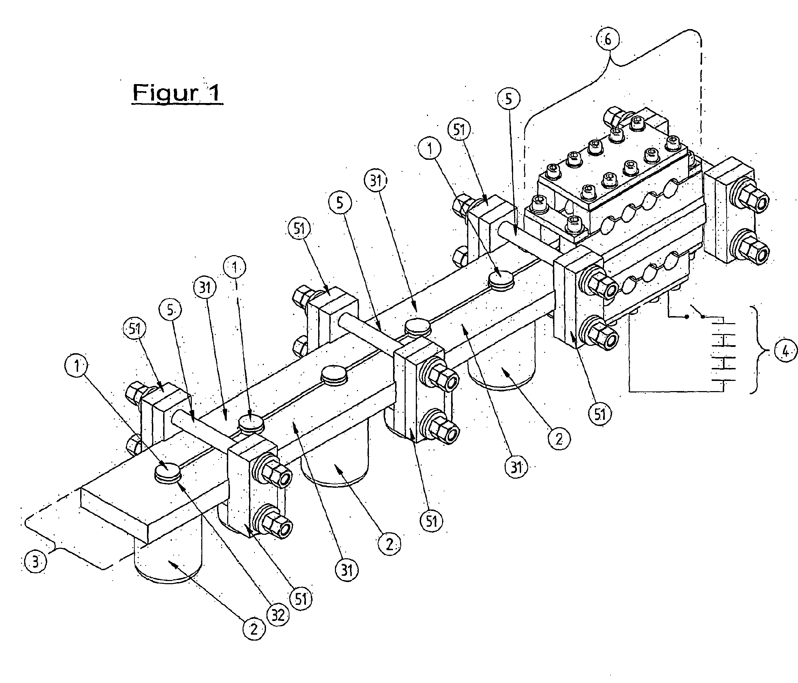

In **Figur 1** ist das Schrägbild eines elektrischen Leiters 3 dargestellt, dessen beide Schenkel 31 vom Feldübersetzer 6, rechts oben im Bild, zum Verbindungspunkt der beiden Schenkel 31, links unten im Bild, verlaufen. Der Feldübersetzer 6 ist das Zwischenglied zwischen dem elektrischen Leiter 3 und der Pulsstromquelle 4, welche in Figur 1 nur schematisch mit ihrem elektrischen Ersatzschaltbild dargestellt ist, hier bestehend aus drei in Reihe geschalteten Kondensatoren, die über einen Schalter mit dem Feldübersetzer 6 verbunden werden können. Nicht in Figur 1 dargestellt ist die Schaltung zum Aufladen der Kondensatoren.
   Wenn der Schalter geschlossen wird, so fließt die in den Kondensatoren gespeicherte Ladung über den Feldübersetzer 6 in einen Schenkel 31 des elektrischen Leiters 3 hinein, nach unten bis zum Verbindungspunkt der beiden Schenkel 31 und im anderen Schenkel 31 wieder zum Feldübersetzer 6. Dabei passiert dieser Strom auch die Einbuchtungen 32 im elektrischen Leiter 3, von denen in Figur 1 nur eine Einbuchtung links unten mit 32 bezeichnet ist. Während des Stromflusses dient die in den Kondensatoren gespeicherte Energie zur Verformung der Kappen 1 und deckt die Verluste auf dem Übertragungsweg ab, also unter anderem im Feldübersetzer 6 und im elektrischen Leiter 3.
   In Figur 1 ist nachvollziehbar, dass für die verformende Wirkung im schmalen Zwischenraum zwischen den beiden Schenkeln 31 des Leiters 3 und in den Einbuchtungen 32 durch den elektrischen Strom ein magnetisches Feld erzeugt wird. Da dieses magnetische Feld in beiden Schenkeln 31 des Leiters 3 gleichsinnig orientiert ist, generiert es eine Kraft, die die beiden Schenkel 31 auseinander drückt. Zu deren Kompensation sind Zuganker 5 quer zu den Schenkeln 31 vorgesehen, die jeweils paarweise oberhalb und unterhalb der Schenkel 31 angeordnet sind und über Druckplatten 51 miteinander verbunden sind, die auf den Stirnkanten der Schenkel 31 aufliegen In dem Ausführungsbeispiel in Figur 1 sind insgesamt 4 Paar Zuganker zu sehen.
   Von den fünf Stück dargestellten Behältern 2 ragt der untere Teil über den elektrischen Leiter 3 nach unten hin heraus. An der Oberseite ist die Kappe 1 zu erkennen, die nach oben hin über den elektrischen Leiter 3 herausragt. Eine genauere Ansicht dieses Bereiches vermitteln die Figuren 2 und 3.
In **Figur 2** ist in dreidimensionaler Darstellung ein Abschnitt des in Figur 1 im hinteren Bereich zu sehenden Schenkels 31 gezeichnet. Dieser Schenkel 31 enthält die Einbuchtung 32, deren Innenkante 33 als Wulst geformt ist, der sich auf der Höhe des Bearbeitungsbereiches 11 der Kappe 1 sowie des Anpressbereiches 21 des Behälters 2 befindet. Auf den Behälter 2 ist die Kappe 1 aufgesetzt und berührt ihn nur an der oberen Kante. Die Seitenwände der Kappe 1 haben noch keinen Kontakt zum Behälter 2, vielmehr ist zwischen dem Anpressbereich 21 des Behälters 2 und dem Bearbeitungsbereich 11 der Kappe 1 ein Spalt sichtbar. Im oberen Bereich der Flasche in ihrem Hals ist der Pfropfen 7 in die Öffnung des Behälters 2 eingesetzt. An seiner Oberseite sind mehrere, etwa kreissektorförmige Öffnungen zu erkennen, die nach unten durchlaufen. Zwischen diesen Öffnungen bilden sich stegartige Wände, die vom äußeren Bereich des Pfropfens 7 bis zu seinem Mittelpunkt verlaufen und für die Versteifung des Pfropfens 7 in radialer Richtung sorgen. Damit wird klar, dass der Pfropfen 7 nicht als Verschluss des Behälters 2 gedacht ist, sondern nur zur Aufnahme der beim Verschließen entstehenden, radialen Kräfte auf den Behälter 2.
In **Figur 3** ist als Schrägbild der gleiche Abschnitt eines Schenkels 31 vom elektrischen Leiter 3 sowie der gleiche Querschnitt durch einen Behälter 2 wie in Figur 2 dargestellt, hier jedoch nach dem Verbördeln der Kappe 1. Zu erkennen ist in Figur 3, dass sich jetzt der Bearbeitungsbereich 11 der Kappe 1 an den Anpressbereich 21 des Behälters 2 unterhalb des Wulstes 23 angelegt hat. Am unteren Ende der Kappe 1 ist die Kante der Kappe etwas nach außen gewölbt, um während des Bördelvorganges die Beschädigung des Behälters 2 durch die Unterkanten der Kappe 1 zu vermeiden. In Figur 3 ist zu sehen, dass die Kappe 1 nur in einem sehr schmalen Bereich am Behälter 2 anliegt, nämlich dem Anpressbereich 21. Auf diesen Bereich sowie einen darunter liegenden schmalen Streifen erstreckt sich auch der Bearbeitungsbereich 11 der Kappe 1.
   In Figur 3 wird nachvollziehbar, dass das magnetische Feld, welches der Leiter 3 erzeugt, sich Sinnvollerweise auf diesen Bearbeitungbereich 11 fokussieren sollte. Zu dem Zweck sind die Innenkanten 33 der Einbuchtung 32 wulstartig geformt und der Behälter 2 ist in vertikaler Richtung so positioniert, dass sich die Innenkante. 33 auf Höhe des Bearbeitungsbereiches 11 befindet.
   In Figur 3 ist unterhalb des umlaufenden Wulstes 23 auf dem Behälter zu erkennen, das der Bearbeitungsbereich 11 der Kappe 1 nicht anliegt, sondern einen geringen Abstand zum Behälter 2 aufweiset. Dieser Abstand ergibt sich durch das "Zurückfedern" der Metallkappe beim Abschalten des Magnetfeldes aus dem Leiter 3. Es wird jedoch auch deutlich, dass der obere Teil des Bearbeitungsbereiches 11 der Kappe 1 auf eine geringen Breite an den Anpressbereich 21 des Behälters 2 angepresst ist, wodurch sich auf dieser Höhe eine voll umfänglich durchgehende Dichtungslinie ergibt.

### Bezugszeichenliste

- 1: Kappe, zum Verschließen des Behälters 2
- 11: Bearbeitungsbereich der Kappe 1
- 2: Behälter, durch Kappe 1 zu verschließen
- 21: Anpressbereich des Behälters.2
- 22: Innenfläche des Behälters 2
- 23: Wulst im Anpressbereich 21
- 3: elektrischer Leiter, umfasst Kappe 1
- 31: Schenkel des Leiters 3
- 32: Einbuchtung in der Innenkante des Leiters 3
- 33: Innenkante des Leiters 3
- 4: Puls-Stromquelle, an elektrischen Leiter 3 angeschlossen
- 5: Zuganker, hält die Schenkel 31 zusammen
- 51: Druckplatte, liegt auf der Stirnkante eines Schenkel 31 auf, verbindet zwei Zuganker 5 miteinander
- 6: Feldübersetzer, zwischen Pulsstromquelle 4 und Leiter 3
- 7: Pfropfen , füllt den Behälter im Anpressbereich 21

## Patentansprüche

1. Verfahren zum Verschließen von Behältern 2 mit Kappen 1 durch eine Mehrfachrohrbearbeitungsspule zum gleichzeitigen Bearbeiten von zwei oder mehreren, in ihrem Bearbeitungsbereich 11 ringförmigen Kappen 1 aus elektrisch leitfähigem Material, die jeweils den Anpressbereich 21 eines Behälters 2 in sich geschlossen umfassen, bestehend aus einer Puls-Stromquelle 4 und einem damit verbundenen, elektrischen Leiter 3,
- der alle Kappen 1 in ihrem Bearbeitungsbereich 11 vollständig umfasst und
- der als ein U geformt ist, dessen beide Schenkel 31
- jeweils einander gegenüberliegend wenigstens je eine Einbuchtung 32 aufweisen, wobei die Innenkanten 33 der beiden jeweils gegenüberliegenden Einbuchtungen 32 gemeinsam eine zum Außenrand des Querschnittes einer jeden Kappe 1 komplementäre und äquidistant vergrößerte Form aufweisen und
- auf den Innenseiten der beiden Schenkel 31 zumindest die Einbuchtungen 32 mit einer elektrisch isolierenden Schicht bedeckt sind, wobei
- der Behälter 2 mit einem Pfropfen 7 im zu verschließenden Bereich ausgefüllt wird und dann
- über die zu verschließende Öffnung des Behälters 2 eine Kappe 1 soweit aufgeschoben wird, dass der Bearbeitungsbereich 11 der Kappe gegenüber vom Anpressbereich 21 des Behälters 2 angeordnet ist und dann
- jeder so vorbereitete Behälter 2 mit seiner Kappe 1 in eine der Einbuchtungen 32 des elektrischen Leiters 3 soweit eingeführt wird, dass der Bearbeitungsbereich 11 der Kappe 1 sich auf Höhe der Innenkante 33 befindet und dann
- der elektrische Leiter 3 von einem Stromimpuls durchflossen wird und dann
- jeder verschlossene Behälter 2 aus dem Bereich des elektrischen Leiters 3 entfernt wird.

2. Verfahren nach Anspruch 1, **dadurch gekennzeichnet, dass** der Außenrand des Querschnittes der Kappe 1 kreisförmig ist und jede der beiden ihr zugeordneten Einbuchtungen 32 die Form eines Halbkreises hat, dessen Radius geringfügig größer als der äußere Radius der Körper 1 ist.

3. Verfahren nach einem der vorhergehenden Ansprüche, **dadurch gekennzeichnet, dass** wenigstens ein Paar gegenüberliegender Innenkanten 33 in einer Radialebene als Wulst geformt sind, der auf den Bearbeitungsbereich 11 der Körper gerichtet ist.

4. Verfahren nach einem der vorhergehenden Ansprüche, **dadurch gekennzeichnet, dass** der Bearbeitungsbereich 11 vor dem Bearbeiten in wenigstens einer Radialebene einen überall gleichen Abstand zum Behälter 2 aufweist.

5. Verfahren nach einem der vorhergehenden Ansprüche, **dadurch gekennzeichnet, dass** der Behälter 2 an seiner Außenseite in wenigstens einer radialen Ebene innerhalb des Anpressbereiches 11 einen in sich geschlossen umlaufenden Wulst 23 aufweist.

6. Verfahren nach einem der vorhergehenden Ansprüche, **dadurch gekennzeichnet, dass** die Kappen 1 an ihrer Innenseite im Bearbeitungsbereich 11 in einer radialen Ebene wenigstens einen in sich geschlossen umlaufenden Wulst aufweisen.

7. Verfahren nach Anspruch 1, **dadurch gekennzeichnet, dass** im Anpressbereich 21 der Behälter 2 mit einem Pfropfen 7 ausgefüllt ist, dessen äußere Fläche komplementär zur Innenfläche 22 des Behälters 2 geformt ist.

8. Verfahren nach einem der vorhergehenden Ansprüche, **dadurch gekennzeichnet, dass** zwischen dem elektrischen Leiter 3 und der Pulsstromquelle 4 ein Transformator als Feldübersetzer 6 eingefügt ist.

9. Verfahren nach einem der vorhergehenden Ansprüche, **dadurch gekennzeichnet, dass** der elektrische Leiter 3 auf den einander gegenüberstehenden Innenflächen seiner Schenkel 31 und auf den Innenkanten 33 mit einem Material beschichtet ist, dessen elektrische Leitfähigkeit höher ist als in den anderen Bereichen des Leiters 3.

10. Verfahren nach Anspruch 9, **dadurch gekennzeichnet, dass** der elektrische Leiter 3 auf den einander gegenüberstehenden Innenflächen seiner Schenkel 31 und auf den Innenkanten 33 mit einem Material beschichtet ist, dessen mechanische Festigkeit geringer ist als in den anderen Bereichen des Leiters 3.

11. Verfahren nach Anspruch 9, **dadurch gekennzeichnet, dass** das elektrisch besonders leitfähige Material aus einem Blechstreifen besteht, der auf den mechanisch tragenden Grundaufbau aufgebracht ist.

12. Verfahren nach den vorhergehenden Ansprüchen, **dadurch gekennzeichnet, dass** der elektrische Leiter aus gestapelten Blechen besteht, die elektrisch gegeneinander isoliert sind und mechanisch fest miteinander verbunden sind.

13. Verfahren nach Anspruch 12, **dadurch gekennzeichnet, dass** die Bleche miteinander verschraubt oder vernietet sind.

14. Verfahren nach einem der vorhergehenden Ansprüche, **dadurch gekennzeichnet, dass** die beiden Schenkel 31 durch wenigstens ein Paar Zuganker 5 versteift sind, von dem je ein Zuganker 5 oberhalb und unterhalb des U-förmigen Leiters 3 angeordnet ist und über je eine Druckplatte 51 auf den Stirnkanten der beiden Schenkel 31 mit seinem Pendant verbunden ist.

15. Verfahren nach einem der vorhergehenden Ansprüche, **dadurch gekennzeichnet, dass** die beiden Schenkel 31 durch Ringe aus Fasern oder einem anderen nicht leitenden Material verstärkt sind, die senkrecht zu beiden Schenkeln 31 ausgerichtet sind und die Schenkel anliegend umschließen.

16. Verfahren nach einem der vorhergehenden Ansprüche, **dadurch gekennzeichnet, dass** jeder Schenkel 31 durch je einen seitlich aufgesetzten flächigen Steg verstärkt ist, der in der Ebene der Schenkel 31 angeordnet ist und in der Mitte der Schenkel 31 am breitesten ist.

17. Verfahren nach einem der vorhergehenden Ansprüche, **dadurch gekennzeichnet, dass** die Oberflächen der Innenkanten 33 mit einem Material beschichtet sind, dessen magnetische Leitfähigkeit höher ist als in den übrigen Bereichen des Leiters 3 und innerhalb jedes Schenkel 31 diese Beschichtungen durch möglichst kurze Verbindungsstücke aus einem ebenfalls magnetisch besser leitenden Material miteinander verbunden sind.

18. Verfahren nach einem der vorhergehenden Ansprüche, **dadurch gekennzeichnet, dass** wenigstens eine Einbuchtung 32 zwei zueinander beabstandete, wulstförmige Innenkanten 33 aufweist.

19. Verfahren nach einem der vorhergehenden Ansprüche, **dadurch gekennzeichnet, dass** an eine Pulsstromquelle 4 mehrere Leiter 3 angeschlossen sind.

20. Verfahren nach Anspruch 14, **dadurch gekennzeichnet, dass** die gemeinsame Pulsstromquelle 4 der Mittelpunkt der an sie angeschlossenen und sternförmig darum angeordneten identischen Leitern 3 ist.

21. Verfahren nach Anspruch 20, **dadurch gekennzeichnet, dass** die Leiter 3 parallel zueinander und auf einer zylindrischen Fläche angeordnet sind,

22. Verfahren nach Anspruch 1, **dadurch gekennzeichnet, dass** über die Kappe 1 eine Zierkappe aus unmagnetischem Material aufschiebbar ist, die an ihrer Innenseite in einer radialen Ebene einen Wulst aufweist, welcher in den Bearbeitungsbereich 11 der Kappe 1 einrastbar ist.

23. Verfahren nach dem vorhergehenden Anspruch 22, **dadurch gekennzeichnet, dass** die Zierkappe an Ihrer Innenseite in einer radialen Ebene zumindest drei, gleichmäßig verteilte Rastnasen aufweist, die in den Bearbeitungsbereich 11 der Kappe 1 einrastbar sind.

24. Verfahren nach den vorhergehenden Ansprüchen, **dadurch gekennzeichnet, dass** die Schenkel 31 des elektrischen Leiters 3 abgewinkelt oder abgebogen verlaufen.

25. Verfahren nach Anspruch 23, **dadurch gekennzeichnet, dass**
- nach dem Aufschieben der Kappe 1 darauf
- noch eine Zierkappe aufgeschoben wird, deren innerer Wulst oder innere Rastnasen sich auf Höhe des Bearbeitungsbereiches 11 der Kappe 1 befinden und
- erst dann jeder so vorbereitete Behälter 2 in eine der Einbuchtungen 32 des elektrischen Leiters 3 eingeführt wird.

26. Verfahren nach den vorhergehenden Ansprüchen, **dadurch gekennzeichnet, dass** der Behälter 2 ein Hohlkörper wie eine Flasche oder ein Gefäß oder ein anderes Teil mit einem etwa ringförmigen Bereich oder eine axialsymmetrische Struktur sein kann.

27. Verfahren zur Herstellung einer Mehrfachrohrbearbeitungsspule nach einem der vorhergehenden Ansprüche, **dadurch gekennzeichnet, dass** die Beschichtung der Innenkanten 33 sowie die Verbindungen dieser Beschichtungen durch Ausgießen von Öffnungen im mechanisch tragenden Grundaufbau des elektrischen Leiters 3 sowie durch Ausgießen des Hohlraumes zwischen den Innenkanten 33 und einer dazu komplementären, jedoch gleichmäßig beabstandeten Negativform der Innenkanten 33 gebildet werden.

## Claims

1. Method for sealing containers 2 with caps 1 by means of a multiple tube processing coil for processing two or more caps 1 that are ring-shaped in the processing zone 11 thereof, are made of electrically conductive material, and each continuously encompass the pressing zone 21 of a container 2, said multiple tube processing coil comprising a pulsed power source 4 and an electric conductor 3 that is connected thereto, and
- entirely surrounds all caps 1 in the processing zone 11 thereof, and
- is shaped as a U, the two legs 31 of which
- are each provided with at least one concavity 32 opposite one another, wherein the internal edges 33 of the two mutually opposing concavities 32 jointly have a shape that is complementary to the external edge of the cross-section of each cap and is equidistantly enlarged, and
- on the internal faces of the two legs 31, at least the concavities 32
are covered with an electrically insulating layer
**wherein**
the container 2 is filled with a plug 7 in the zone to be sealed, and
then
- a cap 1 is pushed over the orifice of the container 2 to be sealed to the extent that the processing zone 11 of the cap is disposed at the level of the pressing zone 21 of the container 2, and then
- each container 2 prepared in this manner, with its cap 1, is introduced into one of the concavities 32 of the electrical conductor 3 to the extent that the processing zone 11 of the cap 1 is located at the level of the internal edge 33, and then
- a current pulse flows through the electrical conductor 3
- and then each sealed container 2 is removed from the vicinity of the electrical conductor 3.

2. Method according to claim 1, **characterised in that** the external edge of the cross-section of the cap 1 is circular and **in that** each of the two concavities 32 assigned to it has a semicircular shape, the radius of which is slightly larger than the outer radius of the element 1.

3. Method according to one of the preceding claims, **characterised in that** at least one pair of opposite internal edges 33 is shaped as a bead in a radial plane, which is oriented to the processing zone 11 of the elements.

4. Method according to one of the preceding claims, **characterised in that**, before processing, the processing zone 11 has a uniform distance from the container 2 in at least one radial plane.

5. Method according to one of the preceding claims, **characterised in that** the container 2 has on its external edge, in at least one radial plane within the pressing zone 11, a continuously surrounding bead 23.

6. Multiple tube processing coil according to one of the preceding claims, **characterised in that** the caps 1 have on their internal face in the processing zone 11, in a radial plane, at least one continuously surrounding bead.

7. Method according to claim 5, **characterised in that**, in the pressing region 21, the container 2 is filled with a plug 7, of which the outer face is shaped so as to be complementary to the internal face 22 of the container 2.

8. Method according to one of the preceding claims, **characterised in that** a transformer is inserted as field translator 6 between the electrical conductor 3 and the pulse current source 4.

9. Method according to one of the preceding claims, **characterised in that** the electrical conductor 3 is coated on the mutually opposite internal faces of its legs 31 and on the internal edges 33, with a material whose electrical conductivity is higher than in the other regions of the conductor 3.

10. Method according to claim 9, **characterised in that** the electrical conductor 3 is coated on the mutually opposite internal faces of its legs 31 and on the internal edges 33, with a material whose mechanical strength is lower than in the other regions of the conductor 3.

11. Method according to claim 9, **characterised in that** the particularly electrically conductive material consists of a sheet metal strip that is mounted on a mechanically supporting basic structure.

12. Method according to the preceding claims, **characterised in that** the electrical conductor 3 consists of stacked metal sheets, which are electrically insulated from one another and are mechanically firmly bonded to one another.

13. Method according to the preceding claim 15, **characterised in that** the plates are screwed or riveted to one another.

14. Method according to one of the preceding claims, **characterised in that** the two legs 31 are stiffened by at least one pair of tension anchors 5, of which one tension anchor 5 in each case is arranged above and below the U-shaped conductor 3, and by means of which one pressure plate 51 on the end faces of the two legs 31 is connected to its counterpart.

15. Multiple tube processing coil according to one of the preceding claims, **characterised in that** the two legs 31 are reinforced by rings of fibres or another non-conductive material, which are oriented perpendicular to the two legs 31 and enclose the legs while bearing against them.

16. Method according to one of the preceding claims, **characterised in that** each of the legs 31 is reinforced by a planar web in each case that bears against it laterally, is arranged in the plane of the legs 31 and is widest in the centre of the legs 31.

17. Method according to one of the preceding claims, **characterised in that** the surfaces of the internal edges 33 are coated with a material whose magnetic permeability is higher than in the other regions of the conductor 3 and within each leg 31 these coatings are connected to one another by means of shortest possible connecting pieces made of a material that also has better magnetic permeability.

18. Multiple tube processing coil according to one of the preceding claims, **characterised in that** at least one concavity 32 has two bead-shaped internal edges 33 with a distance from one another.

19. Method coil according to one of the preceding claims, **characterised in that** a plurality of conductors 3 are connected to a pulsed current source 4.

20. Method according to the preceding claim 14, **characterised in that** the common pulsed current source 4 is at the center of the identical conductors 3 that are connected to it and disposed around it in a stellar arrangement.

21. Method according to claim 20, **characterised in that** the conductors 3 are arranged parallel to one another and on a cylindrical surface.

22. Method according to claim 1, **characterised in that**, over the cap 1, a decorative cap of non-magnetic material can be pushed, which has on its internal face, in a radial plane, a bead, which can be snapped into the processing zone 11 of the cap 1.

23. Method according to claim 22, **characterised in that**, the decorative cap has on its internal face, in a radial plane, at least three uniformly distributed detent lugs, which can be snapped into the processing zone 11 of the cap 1.

24. Method according to one of the preceding claims, **characterised in that** the legs 31 of the electrical conductor 3 are angled or curved.

25. Method according to claim 23, **characterised in that**
- after the cap 1 has been pushed on,
- another, decorative cap is pushed on, the internal bead or internal detent lug of which is located at the level of the processing zone 11 of the cap 1, and
- only then is the container 2 prepared in this manner introduced into one of the concavities 32 of the electrical conductor 3.

26. Method according to the preceding claims, **characterised in that** the container 2 can be a hollow article such as a bottle or a drum or another part with an approximately ring-shaped zone, or an axially symmetrical structure.

27. Method for producing a multiple tube processing coil according to one of the preceding coils, **characterised in that** the coating of the internal edges 33 and the connections of these coatings are formed by casting into openings in the mechanically load-bearing basic structure of the electrical conductor 3 and by casting into the space between the internal edges 33 and the negative shape of the internal edges 33, which is complementary thereto but equidistant therefrom.

## Revendications

1. Procédé destiné à fermer des récipients 2 avec des capuchons 1 au moyen d'une bobine de traitement multiple de tuyau afin de traiter simultanément, dans leur zone de traitement 11, deux ou plusieurs capuchons en forme d'anneau 1 constitués d'un matériau électriquement conducteur, qui comprennent à chaque fois la zone de pressage 21 d'un récipient 2 refermé sur lui-même, composée d'une source de courant d'impulsion 4 et d'un conducteur électrique 3 relié avec elle,
• qui inclut entièrement tous les capuchons 1 dans sa zone de traitement 11 et
• qui est formée comme un U dont les deux renforts 31
• présentant chacune une échancrure 32 située en face de l'autre, sachant que les bords intérieurs 33 des deux échancrures 32 situées en face l'une de l'autre présentent ensemble une forme complémentaire et équidistante agrandie par rapport au bord extérieur de la section de chacun des capuchons et
• que sur les bords intérieurs des deux renforts 31, au moins les échancrures 32 sont couvertes d'une couche isolante électriquement,
**sachant que**
• le réservoir 2 est rempli d'un bouchon 7 dans la zone devant être fermée,
• un capuchon 1 étant poussé ensuite par-dessus l'ouverture du récipient 2 jusqu'à ce que la zone de traitement 11 du capuchon soit disposée vis-à-vis de la zone de pressage 21 du récipient 2 et qu'ensuite
• chacun des récipients 2 ainsi préparés soit introduit, avec son capuchon 1, dans une des échancrures 32 du conducteur électrique 3 jusqu'à ce que la zone de traitement 11 du capuchon 1 se trouve à hauteur du bord intérieur 33 et qu'ensuite
• le conducteur électrique 3 soit parcouru par une impulsion de courant et qu'ensuite
• chaque récipient fermé 2 soit retiré de la zone du conducteur électrique 3.

2. Procédé selon la revendication 1, **caractérisé par le fait que** le bord extérieur de la section du capuchon 1 a une forme circulaire et que chacune des échancrures 32 qui lui sont attribuées a la forme d'un demi-cercle dont le rayon est faiblement supérieur au rayon extérieur du corps 1.

3. Procédé selon l'une des revendications précédentes, **caractérisé par le fait qu'**au moins une paire de bords intérieurs 33 situés en face l'un de l'autre est formé, dans un niveau radial, en tant que bourrelet qui est orienté vers la zone de traitement 11 des corps.

4. Procédé selon l'une des revendications précédentes, **caractérisé par le fait que** la zone de traitement 11 présente, avant le traitement, partout la même distance identique par rapport au récipient 2 dans au moins un niveau radial.

5. Procédé selon l'une des revendications précédentes, **caractérisé par le fait que** le récipient 2 présente, sur sa face extérieure, un bourrelet périphérique 23 refermé sur lui-même dans au moins un niveau radial à l'intérieur de la zone de pressage 11.

6. Procédé selon l'une des revendications précédentes, **caractérisé par le fait que** les capuchons 1 présentent, sur leur face intérieure, dans la zone de traitement 11, au moins un bourrelet périphérique refermé sur lui-même.

7. Procédé selon la revendication 1, **caractérisé par le fait que** dans la zone de pressage 21 le récipient 2 est rempli avec un bouchon 7, dont la surface extérieure est complémentaire par rapport à la surface intérieure 22 du récipient 2.

8. Procédé selon l'une des revendications précédentes, **caractérisé par le fait qu'**un transformateur est inséré en tant que multiplicateur de champ entre le conducteur électrique 3 et la
source de courant d'impulsion 4.

9. Procédé selon l'une des revendications précédentes, **caractérisé par le fait que** le conducteur électrique 3 est muni, sur les surfaces intérieures de ses renforts 31 et sur les bords intérieurs 33, d'un revêtement consistant en un matériau dont la conductivité électrique est supérieure à celle des autres zones du conducteur 3.

10. Procédé selon la revendication 9, **caractérisé par le fait que** le conducteur électrique 3 est pourvu, sur les surfaces intérieures de ses renforts 31 et sur les bords intérieurs 33, d'un revêtement consistant en un matériau dont la résistance mécanique est supérieure à celle des autres zones du conducteur 3.

11. Procédé selon la revendication 9, **caractérisé par le fait que** le matériau électrique particulièrement conducteur consiste en une bande de tôle qui est appliquée sur la structure de base mécaniquement porteuse.

12. Procédé selon les revendications précédentes, **caractérisé par le fait que** le conducteur électrique consiste en tôles empilées qui sont isolées électriquement les unes par rapport aux autres et sont solidement reliées mécaniquement les unes avec les autres.

13. Procédé selon la revendication 12, **caractérisé par le fait que** les tôles sont vissées ou rivetées ensemble.

14. Procédé selon l'une des revendications précédentes, **caractérisé par le fait que** les deux renforts 31 sont rigidifiés par au moins une paire d'ancres de traction 5, l'une des ancres de traction 5 étant disposée au dessus ou en dessous du conducteur en forme de U 3, chacune étant reliée à son pendant d'une plaque de pression 51 sur les deux bords frontaux des deux renforts 31.

15. Procédé selon l'une des revendications précédentes, **caractérisé par le fait que** les deux renforts 31 sont renforcés par des anneaux en fibres ou en un autre matériau non conducteur qui est disposé à la verticale par rapport aux deux renforts 31 et qui cernent les renforts voisins.

16. Procédé selon l'une des revendications précédentes, **caractérisé par le fait que** chaque renfort 31 est renforcé par une traverse de large surface posée latéralement, qui est disposée dans le niveau du renfort 31 et qui est au plus large au milieu du renfort 31.

17. Procédé selon l'une des revendications précédentes, **caractérisé par le fait que** les surfaces des bords intérieurs 33 sont munis d'un revêtement dont la conductivité magnétique est supérieure à celle des autres zones du conducteur 3, et qu'à l'intérieur de chaque renfort 31 ces revêtements sont reliés les uns aux autres par des pièces de liaison aussi courtes que possible consistant en un matériau également meilleur conducteur au plan magnétique.

18. Procédé selon l'une des revendications précédentes, **caractérisé par le fait qu'**au moins une des échancrures 32 présente deux bords intérieurs 33 en forme de bourrelet à une certaine distance l'un de l'autre.

19. Procédé selon l'une des revendications précédentes, **caractérisé par le fait que** plusieurs conducteurs 3 sont reliés à une source de courant d'impulsion.

20. Procédé selon la revendication 14, **caractérisé par le fait que** la source commune de courant d'impulsion 4 est le point central des conducteurs 3 identiques raccordés à elle et disposés en forme d'étoile autour d'elle.

21. Procédé selon la revendication 20, **caractérisé par le fait que** les conducteurs 3 sont disposés parallèlement les uns aux autres et sur une surface cylindrique.

22. Procédé selon la revendication 1, **caractérisé par le fait qu'**un capuchon enjoliveur dans un matériau non magnétique peut être glissé au dessus du capuchon 1, lequel présente sur sa face intérieure, dans un niveau radial, un bourrelet pouvant être encranté dans la zone de traitement 11 du capuchon 1.

23. Procédé selon la revendication précédente 22, **caractérisé par le fait que** le capuchon enjoliveur présente sur sa face intérieure, dans un niveau radial, au moins trois nez d'encrantement répartis uniformément, qui peuvent être encrantés dans la zone de traitement 11 du capuchon 1.

24. Procédé selon les revendications précédentes, **caractérisé par le fait que** les renforts 31 du conducteur électrique 3 suivent un parcours angulaire ou coudé.

25. Procédé selon la revendication 23, **caractérisé par le fait que**
• après que le capuchon a été poussé par-dessus
• un capuchon enjoliveur, dont le bourrelet intérieur ou les nez d'encrantement se trouvent à hauteur de la zone de traitement 11 du capuchon 1 et que
• ce n'est qu'alors que le récipient 2 ainsi préparé est introduit dans une des échancrures 32 du conducteur électrique 3.

26. Procédé selon les revendications précédentes, **caractérisé par le fait que** le récipient 2 peut être un corps creux tel qu'une bouteille ou un récipient ou une autre pièce ayant une zone dont la forme est à peu près celle d'un anneau ou d'une structure axiale symétrique.

27. Procédé destiné à fabriquer une bobine de traitement multiple de tuyau selon l'une des revendications précédentes, **caractérisé par le fait que** le revêtement du bord intérieur 33 ainsi que les liaisons de ces revêtements sont formés par le bouchage par coulée d'ouvertures dans la structure mécanique porteuse du conducteur électrique 3 ainsi que le bouchage par coulée de l'espace creux entre les bords intérieurs 33 et d'une forme négative du bord intérieur 33 à distance régulière.
